(19) Europäisches Patentamt / European Patent Office / Office européen des brevets

(11) **EP 4 492 302 A1**

(12) **EUROPEAN PATENT APPLICATION**
published in accordance with Art. 153(4) EPC

(43) Date of publication:
**15.01.2025 Bulletin 2025/03**

(21) Application number: **22930953.9**

(22) Date of filing: **11.03.2022**

(51) International Patent Classification (IPC):
*G06N 20/00* (2019.01)

(52) Cooperative Patent Classification (CPC):
**G06N 20/00**

(86) International application number:
**PCT/JP2022/011121**

(87) International publication number:
**WO 2023/170973 (14.09.2023 Gazette 2023/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nippon Telegraph And Telephone Corporation**
**Chiyoda-ku**
**Tokyo 100-8116 (JP)**

(72) Inventors:
• **KODAMA, Midori**
**Musashino-shi, Tokyo 180-8585 (JP)**
• **MAEJIMA, Sotaro**
**Musashino-shi, Tokyo 180-8585 (JP)**
• **MATSUYAMA, Ryohei**
**Musashino-shi, Tokyo 180-8585 (JP)**
• **HATA, Takahiro**
**Musashino-shi, Tokyo 180-8585 (JP)**
• **KAMIYA, Masato**
**Musashino-shi, Tokyo 180-8585 (JP)**

(74) Representative: **DREISS Patentanwälte PartG mbB**
**Friedrichstraße 6**
**70174 Stuttgart (DE)**

(54) **REINFORCED LEARNING DEVICE, REINFORCED LEARNING METHOD, AND REINFORCED LEARNING PROGRAM**

(57) Provided is a reinforcement learning device that performs reinforcement learning for a continuous behavior space. In the reinforcement learning device, predetermined settings for simulation and an agent model are stored. The reinforcement learning device includes: an agent model estimation unit that inputs a state acquired by the simulation to the agent model and acquires a measure; a behavior determination unit that calculates a behavior based on the measure and a search amount defined in advance; and a search amount estimation unit for estimating the search amount, the agent model estimation unit updates the agent model according to the setting of the agent model based on the state, a reward, a flag, and the behavior, the search amount estimation unit updates the search amount based on a prediction reward obtained for the reward and the search amount in a previous trial, and the calculation of the behavior, the update of the agent model, and the update of the search amount are repeated until a predetermined condition according to the flag and the setting is satisfied.

**Fig. 2**

EP 4 492 302 A1

## Description

Technical Field

The disclosed technology relates to a reinforcement learning device, a reinforcement learning method, and a reinforcement learning program.

Background Art

Reinforcement learning is a technique through which better behavior for an unknown environment can be learned. It is also possible to use a continuous value for a behavior, and in the case of handling a continuous behavior, an establishment density function of a measure can be handled as a normal distribution of an average $\mu$ and a variance $\sigma^2$ (for example, refer to Non Patent Literature 1). At this time, as $\sigma$ increases, the variation in the calculated behavior increases, and a wider range of search will be conducted.

In addition, since reinforcement learning involves performing learning by trial and error, there is a disadvantage that learning is slow, and studies for reducing calculation time such as parallelization have been conducted (for example, refer to Non Patent Literature 2).

Citation List

Non Patent Literature

Non Patent Literature 1: Hajime Kimura and Shigenobu Kobayashi. "Actor ni tekiseido no rireki o mochiita actor-critic algorithm: fukanzenna value-function no moto deno kyoka-gakushu (in Japanese) (Actor-Critic Algorithm Using Appropriateness History For Actor: Reinforcement Learning Under Incomplete Value-Function" Artificial Intelligence 15.2 (2000): 267-275.

Non Patent Literature 2: Koichiro Mori and Hayato Yamana, "Kyoka-gakushu heiretsuka ni yoru gakushu no kosokuka (in Japanese) (Accelerating Learning by Reinforcement Learning Parallelization)" IPSJ SIG technical reports, Intelligence and Complex System (ICS) 2004.29 (2003-ICS-135) (2004): 89-94.

Summary of Invention

Technical Problem

The conventional reinforcement learning technique has the following first and second problems. The first problem is that learning convergence of reinforcement learning requires a large amount of time. Therefore, when it is possible to achieve learning with as few trials as possible and not to excessively increase the calculation time of one trial for efficient search, it is possible to converge learning with a small calculation time.

The second problem is that, in reinforcement learning in which search and trial and error are performed based on a measure, when the measure is incomplete, search cannot be performed well, and the system may fall into a local solution, making it impossible to achieve optimal control.

The disclosed technology has been made in view of the above points, and an object thereof is to provide a reinforcement learning device, a reinforcement learning method, and a reinforcement learning program capable of dynamically adjusting a search space according to a prediction reward in reinforcement learning for a continuous behavior space.

Solution to Problem

According to a first aspect of the present disclosure, there is provided a reinforcement learning device that performs reinforcement learning for a continuous behavior space, in which predetermined settings for simulation and an agent model are stored, in the simulation based on the setting in the reinforcement learning, a state in a next trial, a reward according to the state, and a flag indicating whether simulation execution has ended are acquired with a behavior defined in advance as an input, the reinforcement learning device includes: an agent model estimation unit that inputs the state acquired by the simulation to the agent model and acquires a measure; a behavior determination unit that calculates the behavior based on the measure and a search amount defined in advance; and a search amount estimation unit for estimating the search amount, the agent model estimation unit updates the agent model according to the setting of the agent model based on the state, the reward, the flag, and the behavior, the search amount estimation unit updates the search amount based on a prediction reward obtained for the reward and the search amount in a previous trial, and the calculation of the behavior, the update of the agent model, and the update of the search amount are repeated until a predetermined condition according to the flag and the setting is satisfied.

According to a second aspect of the present disclosure, there is provided a reinforcement learning method for performing reinforcement learning for a continuous behavior space, in which predetermined settings for simulation and an agent model are stored, in the simulation based on the setting in the reinforcement learning, a state in a next trial, a reward according to the state, and a flag indicating whether simulation execution has ended are acquired with a behavior defined in advance as an input, the state acquired by the simulation is input to the agent model and a measure is acquired, the behavior is calculated based on the measure and a search amount defined in advance, the agent model is further updated according to the setting of the agent model based on the state, the reward, the flag, and the behavior, the search amount is updated based on a prediction reward obtained for the reward and the search amount in a previous trial, and the calculation of the behavior, the update of the agent model, and the update of the search amount are repeated until a predetermined condition according to the flag and the setting is satisfied.

According to a third aspect of the present disclosure, there is provided a reinforcement learning program for performing reinforcement learning for a continuous behavior space, in which predetermined settings for simulation and an agent model are stored, in the simulation based on the setting in the reinforcement learning, a state in a next trial, a reward according to the state, and a flag indicating whether simulation execution has ended are acquired with a behavior defined in advance as an input, the state acquired by the simulation is input to the agent model and a measure is acquired, the behavior is calculated based on the measure and a search amount defined in advance, the agent model is further updated according to the setting of the agent model based on the state, the reward, the flag, and the behavior, the search amount is updated based on a prediction reward obtained for the reward and the search amount in a previous trial, and the calculation of the behavior, the update of the agent model, and the update of the search amount are repeated until a predetermined condition according to the flag and the setting is satisfied.

Advantageous Effects of Invention

According to the disclosed technology, in reinforcement learning for a continuous behavior space, a search space can be dynamically adjusted according to a prediction reward.

Brief Description of Drawings

Fig. 1 is a block diagram illustrating a hardware configuration of a reinforcement learning device.
Fig. 2 is a block diagram illustrating a functional configuration of the reinforcement learning device of the present embodiment.
Fig. 3 is an example of data stored in a learning setting storage unit.
Fig. 4 is an example of data of an agent model stored in a model storage unit.
Fig. 5 is an example of behavior data stored in a behavior storage unit.
Fig. 6 is a flowchart illustrating a flow of reinforcement learning processing by the reinforcement learning device.

Description of Embodiments

Hereinafter, an example of an embodiment of the disclosed technology will be described with reference to the drawings. In the drawings, the same or equivalent components and portions are denoted by the same reference signs. In addition, dimensional ratios in the drawings are exaggerated for convenience of description and thus may be different from actual ratios.

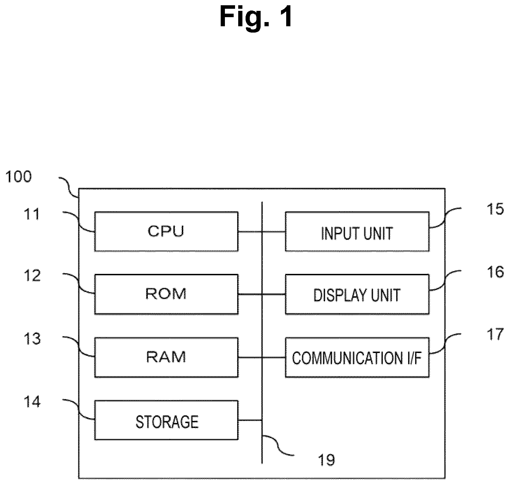

Fig. 1 is a block diagram illustrating a hardware configuration of a reinforcement learning device 100.

As illustrated in Fig. 1, the reinforcement learning device 100 includes a central processing unit (CPU) 11, a read only memory (ROM) 12, a random access memory (RAM) 13, a storage 14, an input unit 15, a display unit 16, and a communication interface (I/F) 17. The components are communicatively connected to each other via a bus 19.

The CPU 11 is a central processing unit that executes various programs and controls each unit. That is, the CPU 11 reads a program from the ROM 12 or the storage 14, and executes the program using the RAM 13 as a working area. The CPU 11 performs control of each of the components described above and various types of calculation processing according to a program stored in the ROM 12 or the storage 14. In the present embodiment, a reinforcement learning program is stored in the ROM 12 or the storage 14.

The ROM 12 stores various programs and various types of data. The RAM 13 is a working area that temporarily stores programs or data. The storage 14 includes a storage device such as a hard disk drive (HDD) or a solid state drive (SSD) and stores various programs including an operating system and various types of data.

The input unit 15 includes a pointing device such as a mouse and a keyboard, and is used to perform various inputs.

The display unit 16 is, for example, a liquid crystal display and displays various types of information. The display unit 16 may function as the input unit 15 by employing a touchscreen system.

The communication interface 17 is an interface communicating with another device such as a terminal. For the communication, for example, a wired communication standard such as Ethernet (registered trademark) or FDDI, or a wireless communication standard such as 4G, 5G, or Wi-Fi (registered trademark) is used.

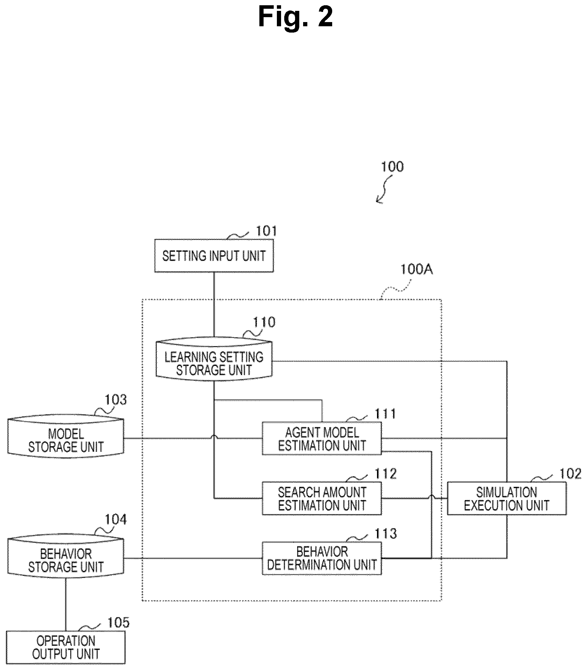

Next, each functional configuration of the reinforcement learning device 100 will be described. Fig. 2 is a block diagram illustrating a functional configuration of the reinforcement learning device of the present embodiment. Each functional configuration is realized by the CPU 11 reading a reinforcement learning program stored in the ROM 12 or the storage 14, developing the reinforcement learning program in the RAM 13, and executing the reinforcement learning program. The reinforcement learning device 100 performs reinforcement learning for a continuous behavior space.

As illustrated in Fig. 2, the reinforcement learning device 100 includes a learning setting storage unit 110, an agent model estimation unit 111, a search amount estimation unit 112, and a behavior determination unit 113. This configuration is the main configuration 100A of the reinforcement learning device 100. Furthermore, the reinforcement learning device 100 includes a setting input unit 101, a simulation execution unit 102, a model storage unit 103, a behavior storage unit 104, and an operation output unit 105 as processing units having input and output functions.

The setting input unit 101 stores the data received by the input from the user in the learning setting storage unit 110. Note that the setting input unit 101 corresponds to the input unit 15 as hardware.

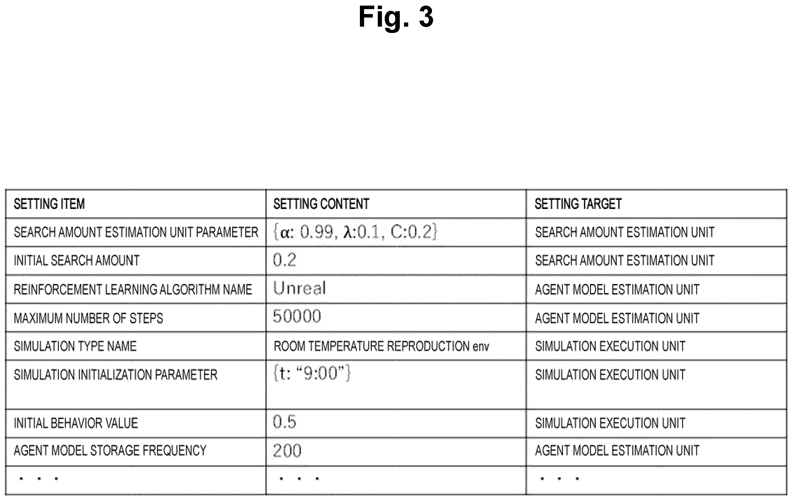

In the learning setting storage unit 110, data received from the user by the setting input unit 101 is saved as a setting. Fig. 3 is an example of data stored in the learning setting storage unit 110. In the data, information is stored for each column of "setting item", "setting content", and "setting target". The "setting content" is a setting or a setting value for the "setting item". A "setting target" is a target processing unit of the reinforcement learning device 100. In the first and second lines, settings for {search amount estimation unit parameter} and {initial search amount} for the "setting item" are stored and used by the search amount estimation unit 112. As the {search amount estimation unit parameter}, $\alpha$, $\lambda$, and C are determined. In the third line, the setting of the "setting item" for {reinforcement learning algorithm name} is stored and used by the agent model estimation unit 111. A reinforcement learning algorithm (hereinafter, what is simply described as an algorithm refers to a reinforcement learning algorithm) that defines processing content in the agent model estimation unit 111 is selected based on {reinforcement learning algorithm name}. In the fourth and eighth lines, settings for {maximum number of steps} and {agent model storage frequency} are stored as "setting item" required for each algorithm. In the fifth to seventh line, settings for {simulation type name} and {simulation initialization parameter} for selecting processing contents of the simulation execution unit 102 and {initial behavior value} indicating a behavior value at the start of execution are stored as "setting item". Note that these settings are an example, and settings necessary for reinforcement learning can be stored in the learning setting storage unit 110 as appropriate. The learning setting storage unit 110 transmits each stored setting value to each of the simulation execution unit 102, the agent model estimation unit 111, and the search amount estimation unit 112 which are setting targets of each setting value.

The simulation execution unit 102 executes a simulation for an input behavior a. Regarding the input of the behavior a to be a trigger for simulation execution, the initial behavior value is received from the learning setting storage unit 110 during the initial operation, and the initial behavior value is set as the behavior a. The behavior a is received from the behavior determination unit 113 except during the initial operation. The simulation execution unit 102 outputs a state s (next state s) observed as a result of the simulation, a reward r defined for the state, and a flag d by execution of the simulation, and transmits these outputs to the agent model estimation unit 111. The flag d is a true/false value indicating whether the simulation ends and the simulation environment should be reset.

The internal algorithm of the simulation execution unit 102 is set according to {simulation type name} stored in the learning setting storage unit 110. As the internal algorithm, for example, an internal algorithm corresponding to a video game or a board game in which a screen or a state transitions with respect to a specific operation, or a simulator can be used. The simulator reproduces a state change when the device is operated with respect to a specific state prepared in advance by the user, and for example, a simulator that reproduces a change in indoor temperature and humidity when air conditioning is controlled can be used. Note that, in a case where there is a real environment having the same input and output as that of the simulation execution unit 102, the real environment may be used. The real environment is, for example, an environment in which there is a building in which air conditioning can be controlled, and a change in indoor temperature and humidity can be measured by a sensor or the like to collect data.

The agent model estimation unit 111 receives the output (state s, reward r, and flag d) transmitted from the simulation execution unit 102, and receives the behavior a of the previous trial transmitted from the behavior determination unit 113. Furthermore, the agent model estimation unit 111 reads various setting values stored in the learning setting storage unit 110, and extracts an agent model stored in the model storage unit 103.

The agent model estimation unit 111 inputs the state s acquired from the simulation execution unit 102 to the agent model, and acquires a measure $\pi$ as a part of the output of the agent model. The agent model estimation unit 111 transmits the acquired measure $\pi$ to the behavior determination unit 113. In addition, the agent model estimation unit 111 inputs the state s, the reward r, the flag d, and the behavior a to the extracted agent model, and updates the agent model. Here, the state s used for updating the agent model is a next state s for the next time (trial) as described later, and is the reward r and the flag d corresponding to the next state s. In addition, the behavior a is updated after the measure $\pi$ is acquired. The internal algorithm (reinforcement learning algorithm) used for calculation of the agent model is defined by {reinforcement learning algorithm name} stored in the learning setting storage unit 110. An existing technology may be used as the reinforcement learning algorithm, and an algorithm for a continuous value behavior may be used. The agent model defined by the algorithm is in the form of a function or a neural network, and the hyperparameter and the weighting coefficient of the neural network are updated by a method defined by each algorithm. Depending on the algorithm, the history of the state s, the reward r, and the behavior a may be stored in the agent model estimation unit and used for updating the model. When the update of the agent model defined by the algorithm is executed or when the storage frequency of the agent model is described in the learning setting storage unit 110, the agent model estimation unit 111 transmits the updated agent model to the model storage unit 103 based on the setting value.

The search amount estimation unit 112 receives the reward r transmitted from the simulation execution unit 102, and updates a prediction reward $r_{pred}$ from, for example, Formula (1) based on the reward r. The parameter $\alpha$ of Formula (1) is a learning rate of the prediction reward, and a setting value of {search amount estimation parameter} stored in the learning setting storage unit 110 is used. In addition, $r_{pred}$ on the right side is a prediction reward before updating. Note that any value such as 0 is used as the initial value of $r_{pred}$ on the right side.

[Math. 1]

$$r_{pred} = (1 - \alpha) * \ r_{pred} + \alpha * r$$

$$\cdots (1)$$

Next, the search amount estimation unit 112 determines the search amount $\sigma$ from Formula (2) based on the prediction reward $r_{pred}$ and transmits the same to the behavior determination unit 113. Note that the parameters $\lambda$ and C in Formula (2) use setting values of {search amount estimation parameter} stored in the learning setting storage unit 110.

[Math. 2]

$$\sigma = \lambda * r_{pred} + C$$

$$\cdots (2)$$

Formulas (1) and (2) are simplified models for dynamically adjusting motion variations in animal and human motion learning.

The behavior determination unit 113 calculates and determines the behavior a for the next trial based on the measure $\pi$ transmitted from the agent model estimation unit 111 and the search amount $\sigma$ output from the search amount estimation unit 112, and transmits the behavior a to the simulation execution unit 102.

Here, in a case where the measure $\pi$ represents a normal distribution of the average $\mu$ and the variance $\sigma^2$, the probability density function of the behavior a can be expressed by the search amount $\sigma$ output from the search amount estimation unit 112 as in the following Formula (3). x is a random variable. The behavior a is probabilistically determined according to the probability density function. As a result, reinforcement learning for the continuous behavior space can be performed.

[Math. 3]

$$f(a_i) = \frac{1}{\sqrt{2\pi\sigma^2}} \exp(-\frac{(x-\mu)^2}{2\sigma^2})$$

$$\cdots (3)$$

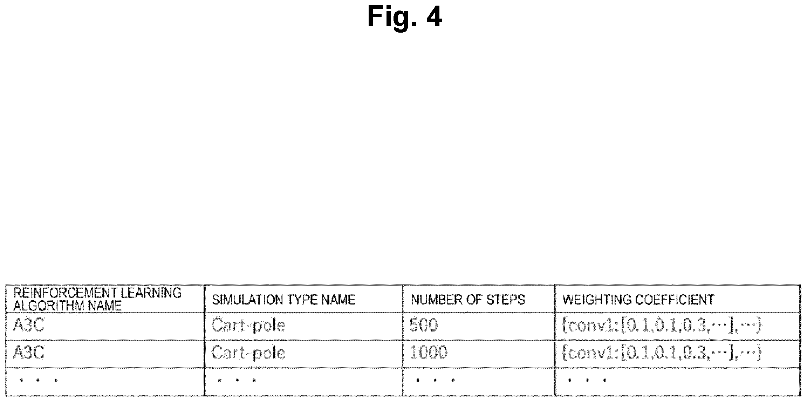

The model storage unit 103 stores the agent model updated in the agent model estimation unit 111. Fig. 4 is an example of data of an agent model stored in the model storage unit 103. In principle, the model is stored every time the model is updated. In a case where {agent model storage frequency} is described in the learning setting storage unit 110, the setting is followed.

Furthermore, when the learning of the agent model estimation unit 111 is interrupted in the middle and executed again, in a case where the same {reinforcement learning algorithm name} and the same {simulation type name} models are stored in the model storage unit 103 in advance, a model with a large number of steps can be read and used.

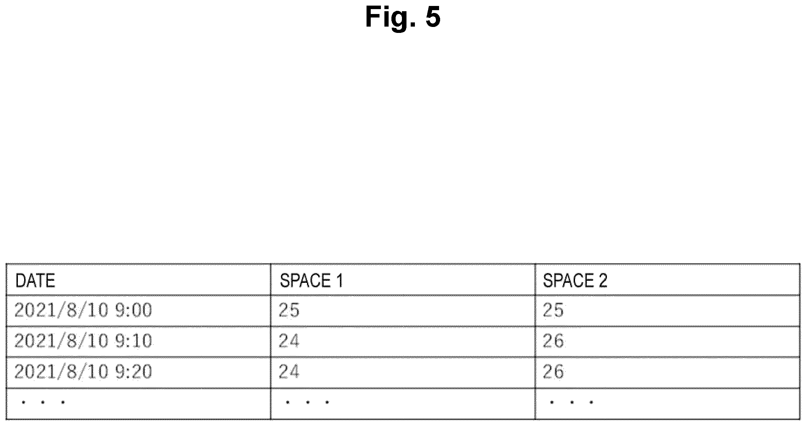

The behavior storage unit 104 stores the behavior transmitted from the behavior determination unit 113 at each time. Fig. 5 is an example of behavior data stored in the behavior storage unit 104.

The operation output unit 105 extracts a behavior during a specific period stored in the behavior storage unit 104, and outputs control contents to a target controller.

(Processing Flow of Reinforcement Learning Device 100)

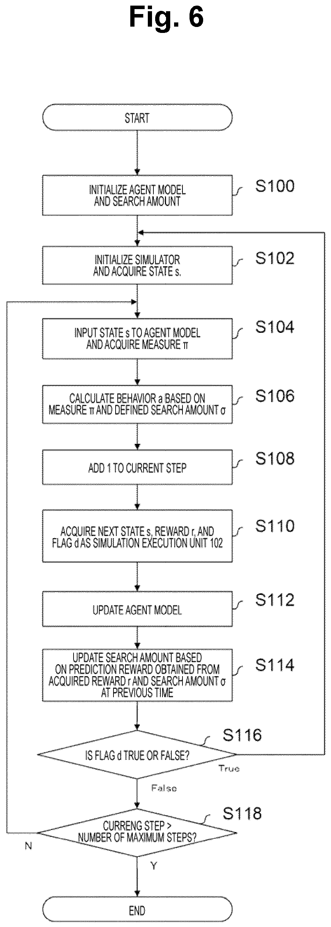

Next, actions of the reinforcement learning device 100 will be described. Fig. 6 is a flowchart illustrating a flow of reinforcement learning processing by the reinforcement learning device 100. The reinforcement learning processing is performed by the CPU 11 reading a reinforcement learning program from the ROM 12 or the storage 14, developing the reinforcement learning program in the RAM 13, and executing the reinforcement learning program.

In step S100, the CPU 11 initializes the agent model and the search amount. The agent model is initialized by the agent model estimation unit 111, and the search amount is initialized by the search amount estimation unit 112.

The agent model estimation unit 111 initializes the agent model based on the setting item such as {reinforcement learning algorithm name} stored in the learning setting storage unit 110. In the model storage unit 103, when a model corresponding to the combination of {reinforcement learning algorithm name} and {simulation type name} stored in the learning setting storage unit 110 already exists, a model having a larger number of steps among the corresponding models is read as the weight of the agent model. Here, when the model stored in the model storage unit 103 is read, the current number of steps is defined by the number of steps of the stored model. When the model stored in the model storage unit 103 is not read, the current number of steps is set to 0. The current number of steps is stored in the agent model estimation unit 111.

In addition, the search amount estimation unit 112 extracts {search amount estimation parameter} and {initial search amount} stored in the learning setting storage unit 110. The value of the initial search amount is initialized to be used as the search amount.

In step S102, the CPU 11 initializes the simulator in the simulation execution unit 102 and acquires the state s.

The simulation execution unit 102 reads {simulation type name} and {simulation initialization parameter} stored in the learning setting storage unit 110, and initializes the simulation environment corresponding to the simulation type name using the simulation initialization parameter. The simulation execution unit 102 outputs the initial state s by initialization and outputs the initial state s to the agent model estimation unit. The state s is stored in the simulation execution unit 102.

In step S104, the CPU 11 inputs, as the agent model estimation unit 111, the state s acquired from the simulation execution unit 102 to the agent model, and acquires the measure $\pi$ as an output.

In step S106, the CPU 11, as the behavior determination unit 113, calculates and determines the behavior a based on the measure $\pi$ output from the agent model estimation unit 111 and the search amount $\sigma$ defined by the search amount estimation unit 112. The behavior a is output to the simulation execution unit 102 and the behavior storage unit 104, and is also stored inside the agent model estimation unit 111.

In step S108, the CPU 11 adds 1 to the current step stored in the agent model estimation unit 111.

In step S110, the CPU 11 acquires the next state s, the reward r, and the flag d as the simulation execution unit 102. The simulation execution unit 102 acquires the next state s for the next time (next trial) based on the behavior a acquired from the behavior determination unit 113 and the state s stored in the simulation execution unit 102. In addition, the simulation execution unit 102 acquires the next state s and calculates the reward r and the flag d indicating whether the simulation execution has ended according to the next state s.

In step S112, the CPU 11 updates the agent model as the agent model estimation unit 111. The update is executed according to {reinforcement learning algorithm name} based on the state s, the reward r, and the flag d acquired from the simulation execution unit 102 and the behavior a stored in the agent model estimation unit 111. When the updated agent model corresponds to the frequency described in {agent model storage frequency}, the updated agent model is stored in the model storage unit 103.

Note that, depending on the type of the reinforcement learning algorithm, there are a case where the agent model is updated every simulation execution, and a case where the update is collectively performed every plurality of times without updating the model. In a case where the algorithm name registered in {reinforcement learning algorithm name} is an algorithm to be updated collectively at intervals of a plurality of times, the algorithm name is stored inside the agent model estimation unit 111 without being updated. That is, in a case other than the update timing defined by the algorithm, the agent model update processing is not performed, and instead, the state s, the reward r, and the flag d acquired from the simulation execution unit 102 are stored in the agent model estimation unit 111. At the update timing defined by the algorithm, the agent model is updated based on the history of the state s, the reward r, the flag d, and the behavior a stored in the agent model estimation unit 111.

In step S114, the CPU 11, as the search amount estimation unit 112, updates the search amount based on the prediction reward obtained from the reward r acquired from the simulation execution unit 102 and the search amount $\sigma$ at the time before being stored in the search amount estimation unit 112. The update of the search amount is performed by the calculation of the prediction reward of the above Formula (1) and the calculation of the search amount $\sigma$ of the above Formula (2). The updated search amount is stored inside the search amount estimation unit 112 and used when the behavior determination unit 113 operates. By updating the search amount in this manner, the update can be performed to expand the search space when the reward amount is small.

In step S116, the CPU 11 determines whether the flag d in the simulation execution unit 102 is True or False. In the case of True, initialization of the simulation execution unit 102 in step S102 is executed, and subsequent processing is executed again. When the flag d is False, the process proceeds to step S118. False is an example of satisfying the predetermined condition regarding the flag of the present disclosure.

In step S118, the CPU 11 determines whether or not the current step, which is a variable held in the agent model estimation unit 111, exceeds the maximum number of steps stored in the learning setting storage unit 110. When the current step does not exceed the maximum number, the processing in and after step S104 is executed again, and when the current step exceeds the maximum number, all the processing ends. Exceeding the maximum number of steps is an example of satisfying a predetermined condition regarding the setting of the present disclosure.

According to the reinforcement learning device 100 of the present embodiment described above, in reinforcement learning for a continuous behavior space, a search space can be dynamically adjusted according to a prediction reward. As a result, in a situation where a large amount of reward can be obtained, the time until learning convergence is shortened without expanding the search space, and in a situation where no reward can be obtained, optimal control can be realized without falling into a local solution by expanding the search space.

In general, in a situation where a large amount of reward can be obtained, it is possible to execute control that may be a current measure, and thus, the demand for a wide range search is low. Conversely, in a situation where no reward can be obtained, it is difficult to execute good control, and thus, it is necessary to perform a wide range of search. In the technique of the present disclosure, by dynamically adjusting the search space according to the prediction reward, the search space is expanded in a case where the user falls into a measure in which the reward cannot be obtained, and a wide range of behavior is tried to escape from the local solution and search for the optimal solution.

According to the technique of the present disclosure, it is possible to shorten a time until learning convergence by efficiently performing a search in reinforcement learning for a continuous behavior space, and to solve the first problem. In addition, by expanding the search space in a case where the reward amount is small, it is possible to learn a measure that can acquire a reward more without falling into a local solution, and it is possible to solve the second problem.

(Utilization in Various Industrial Fields)

Since the technique using the reinforcement learning device 100 in the present disclosure can be used in various industrial fields, each case will be described with reference to utilization examples.

<When Used for Air Conditioning Control>

In the case of the present usage mode, a simulator that predicts future room temperature change and heat consumption using weather data, the number of visitors, past room temperature, air conditioning control data, and the like as inputs is used as the simulation execution unit 102, and a setting value of air conditioning control is handled as a behavior. As a result, it is possible to create an agent model that learns optimal air conditioning control for realizing energy saving while maintaining comfort.

The temperature prediction in the simulation execution unit 102 can be realized by using a neural network or a regression model in which various types of data are input and room temperature is output. Furthermore, the prediction of the heat consumption amount can be realized by using a regression model that predicts the required heat quantity using weather data, the number of visitors, and the setting value of the air conditioner as inputs. These can also be used in combination.

At this time, the simulation execution unit 102 internally holds data acquired from various sensors and the like such as weather data, the number of visitors, past room temperature, and air conditioning control history (this is defined as environmental data). It is also assumed that the simulation execution unit 102 has learned in advance a model that reproduces an environmental change at a future time using these environmental data and a model that estimates the amount of heat (heat consumption amount) consumed by the air conditioning device in accordance with the air conditioning control. In addition, it is assumed that a rule for evaluating whether these values are comfortable and energy saving is determined in advance based on the estimated temperature and humidity and heat consumption amount.

Note that step S100 is as described in the above processing flow. In step S102, the simulation execution unit 102 reads {simulation type name} and {simulation initialization parameter} registered in the learning setting storage unit 110. Here, when used for air conditioning control, a name (for example, indoor temperature and humidity reproduction env) of a simulator for predicting future room temperature change is designated according to weather, the number of visitors, past room temperature, and air conditioning control. The simulation execution unit 102 is initialized according to {simulation initialization parameter}. For example, one day is randomly selected from dates on which environmental data exists and on which simulation can be executed, and environmental data necessary for performing indoor temperature and humidity reproduction from the time t on the date is loaded and held in the simulation execution unit 102 at the time t designated by the simulation initialization parameter. In addition, environmental data necessary for estimating the heat consumption amount from the time t of the date is similarly loaded and held in the simulation execution unit 102. As an initial state, indoor temperature and humidity data at the time t is acquired and output to the agent model estimation unit 111.

Steps S104, S108, and S112 and subsequent steps are as described in the above processing flow.

Step S106 is as described in the above processing flow. Here, the behavior a indicates an air conditioning control method at a certain time, and indicates a setting value for each air conditioning device as illustrated in Fig. 4. In step S110, the simulation execution unit 102 predicts the indoor temperature and humidity at the next time (for example, after 10 minutes). The indoor temperature and humidity are predicted based on the behavior a (that is, the air conditioning control method) acquired from the behavior determination unit 113, the state s stored in the simulation execution unit 102, and environmental data loaded in advance. The amount of heat consumed by the air conditioning device in accordance with the air conditioning control is estimated using the state s and the environmental data loaded in advance. A reward is determined from the state s representing the indoor temperature and humidity and the predicted amount of consumed heat based on a rule for evaluating whether or not a state is good in terms of predetermined comfort and energy saving. In a case where the time at which the simulation is performed is the last time at which data is present on the date, the flag d as to whether the simulation has ended is set to True, and in other cases, the flag d is set to False. The state s, the reward r, and the flag d are output to the agent model estimation unit 111 and the search amount estimation unit 112.

<When Used in Device Control of Robot or the Like>

In the case of the present usage mode, a simulator that predicts a future state of a device using information indicating a state of the device and a device operation as inputs is used as the simulation execution unit 102, and an operation command of the device (instructions for motor operation and device movement) is handled as a behavior. The information indicating the state of the device is the angle and speed of the joint, the position information of the robot, and the like. As a result, it is possible to create an agent model that learns optimal device control for realizing a target operation. At this time, it is assumed that the simulation execution unit 102 has been trained to predict a change in the device state in advance from data measured in advance, or the change in the device state can be predicted by the physical simulator. In addition, it is assumed that a rule for evaluating the target operation is determined in advance.

Note that step S100 is as described in the above processing flow. In step S102, the simulation execution unit 102 reads {simulation type name} and {simulation initialization parameter} registered in the learning setting storage unit 110. Here, in the case of being used for robot control, a name (for example, robot arm env) of a simulator for predicting the next state from the previous state and the device operation is designated. The simulation execution unit 102 is initialized according to {simulation initialization parameter}.

Steps S104, S108, and S112 and subsequent steps are as described in the above processing flow.

Step S106 is as described in the above processing flow. Here, the behavior a indicates a device control method at a certain time. In step S110, the simulation execution unit 102 predicts the state change at the next time (for example, after 1 second). The state change is predicted based on the behavior a (that is, the device control method) acquired from the behavior determination unit 113, the state s stored in the simulation execution unit 102, and environmental data loaded in advance. In addition, a reward is determined based on a rule for evaluating the predetermined target operation. As a result of performing the simulation, in a case where the simulation ends due to the failure of the operation, the flag d indicating whether the simulation ends is set to True, and in other cases, the flag d is set to False. The state s, the reward r, and the end flag d are output to the agent model estimation unit and the search amount estimation unit. The operation failure means, for example, that an object is dropped when the robot arm carries the object, or that a moving robot goes out of an operation target area.

<When Used for Game Operation>

In the case of the present usage mode, as the simulation execution unit 102, a simulator is used in which a game in which the state transitions using information indicating the state (game screen and the like) and game operations as input is used as a simulator, and the game operation is handled as a behavior. As a result, it is possible to create an agent model for learning a game operation that can obtain a high score. At this time, it is assumed that a rule of the game is predetermined and can be acquired as a reward.

Note that step S100 is as described in the above processing flow. In step S102, the simulation execution unit 102 reads {simulation type name} and {simulation initialization parameter} registered in the learning setting storage unit 110. Here, in the case of being used for a game operation, a name (for example, block break env) of a simulator (game) is designated. The simulation execution unit is initialized according to {simulation initialization parameter}.

Steps S104, S108, and S112 and subsequent steps are as described in the above processing flow.

Step S106 is as described in the above processing flow. Here, the behavior a indicates a device control method at a certain time. In step S110, the simulation execution unit 102 executes the game using the behavior a (that is, the game operation) acquired from the behavior determination unit 113, and obtains a state change at the next time (for example, after one frame). In addition, a reward is acquired based on the predetermined rule of game. As a result of performing the simulation, in a case where the simulation (game execution) ends due to the game over or the like, the flag d indicating whether the simulation ends is set to True, and in other cases, the flag d is set to False. The state s, the reward r, and the end flag d are output to the agent model estimation unit and the search amount estimation unit.

The above is the description of the utilization example.

Note that, the reinforcement learning processing executed by the CPU reading software (program) in the above embodiment may be executed by various processors other than the CPU. Examples of the processors in this case include a programmable logic device (PLD) of which circuit configuration can be changed after the manufacturing, such as a field-programmable gate array (FPGA), a graphics processing unit (GPU), and a dedicated electric circuit that is a processor having a circuit configuration exclusively designed for executing specific processing, such as an application specific integrated circuit (ASIC). In addition, the reinforcement learning processing may be executed by one of these various processors, or may be executed by a combination of two or more processors of the same type or different types (for example, a plurality of FPGAs, a combination of a CPU and an FPGA, and the like). More specifically, a hardware structure of the various processors is an electric circuit in which circuit elements such as semiconductor elements are combined.

In the above embodiment, the aspect in which the reinforcement learning program is stored (installed) in advance in the storage 14 has been described, but the embodiment is not limited thereto. The program may be provided by being stored in a non-transitory storage medium such as a compact disk read only memory (CD-ROM), a digital versatile disk read only memory (DVD-ROM), and a Universal Serial Bus (USB) memory. In addition, the program may be downloaded from an external device via a network.

Regarding the above embodiment, the following supplementary notes are further disclosed.

(Supplementary Note 1)

A reinforcement learning device which includes a memory, and at least one processor connected to the memory, and in which the processor performs reinforcement learning for a continuous behavior space, in which

predetermined settings for simulation and the agent model are stored,
in the simulation based on the setting in the reinforcement learning, a state in a next trial, a reward according to the state, and a flag indicating whether simulation execution has ended are acquired with a behavior defined in advance as an input,
the state acquired by the simulation is input to the agent model and a measure is acquired,
the behavior is calculated based on the measure and a search amount defined in advance,
the agent model is further updated according to the setting of the agent model based on the state, the reward, the flag, and the behavior,
the search amount is updated based on a prediction reward obtained for the reward and the search amount in a previous trial, and
the calculation of the behavior, the update of the agent model, and the update of the search amount are repeated until a predetermined condition according to the flag and the setting is satisfied.

(Supplementary Note 2)

A non-transitory storage medium that stores a program executable by a computer to execute reinforcement learning processing, in which

the program is a reinforcement learning program that performs reinforcement learning for a continuous behavior space,
predetermined settings for simulation and the agent model are stored,
in the simulation based on the setting in the reinforcement learning, a state in a next trial, a reward according to the state, and a flag indicating whether simulation execution has ended are acquired with a behavior defined in advance as an input,
the state acquired by the simulation is input to the agent model and a measure is acquired,
the behavior is calculated based on the measure and a search amount defined in advance,
the agent model is further updated according to the setting of the agent model based on the state, the reward, the flag, and the behavior,
the search amount is updated based on a prediction reward obtained for the reward and the search amount in a previous trial, and
the calculation of the behavior, the update of the agent model, and the update of the search amount are repeated until a predetermined condition according to the flag and the setting is satisfied.

Reference Signs List

| 100 | Reinforcement learning device |
|-----|-------------------------------|
| 100 | Learning device |
| 101 | Setting input unit |
| 102 | Simulation execution unit |
| 103 | Model storage unit |
| 104 | Behavior storage unit |
| 105 | Operation output unit |
| 110 | Learning setting storage unit |
| 111 | Agent model estimation unit |
| 112 | Search amount estimation unit |
| 113 | Behavior determination unit |

**Claims**

1. A reinforcement learning device that performs reinforcement learning for a continuous behavior space, wherein

predetermined settings for simulation and an agent model are stored,
in the simulation based on the setting in the reinforcement learning, a state in a next trial, a reward according to the state, and a flag indicating whether simulation execution has ended are acquired with a behavior defined in advance as an input,
the reinforcement learning device comprises:

an agent model estimation unit that inputs the state acquired by the simulation to the agent model and acquires a measure;
a behavior determination unit that calculates the behavior based on the measure and a search amount defined in advance; and

a search amount estimation unit for estimating the search amount,

the agent model estimation unit updates the agent model according to the setting of the agent model based on the state, the reward, the flag, and the behavior,

the search amount estimation unit updates the search amount based on a prediction reward obtained for the reward and the search amount in a previous trial, and

the calculation of the behavior, the update of the agent model, and the update of the search amount are repeated until a predetermined condition according to the flag and the setting is satisfied.

2. The reinforcement learning device according to claim 1, wherein the search amount estimation unit calculates the prediction reward based on a parameter of a learning rate of the prediction reward determined in the setting and the reward, and updates a search amount based on the calculated prediction reward and a parameter for estimating the search amount in the setting.

3. The reinforcement learning device according to claim 1 or 2, wherein the behavior determined by the behavior determination unit is probabilistically determined according to a probability density function using a random variable and an average and a variance of a normal distribution represented by the measure.

4. The reinforcement learning device according to claim 1 or 2, wherein the behavior is an air conditioning control method.

5. A reinforcement learning method for performing reinforcement learning for a continuous behavior space, causing a computer to execute processing of: wherein

predetermined settings for simulation and an agent model are stored,

in the simulation based on the setting in the reinforcement learning, a state in a next trial, a reward according to the state, and a flag indicating whether simulation execution has ended are acquired with a behavior defined in advance as an input,

the state acquired by the simulation is input to the agent model and a measure is acquired,

the behavior is calculated based on the measure and a search amount defined in advance,

the agent model is further updated according to the setting of the agent model based on the state, the reward, the flag, and the behavior,

the search amount is updated based on a prediction reward obtained for the reward and the search amount in a previous trial, and

the calculation of the behavior, the update of the agent model, and the update of the search amount are repeated until a predetermined condition according to the flag and the setting is satisfied.

6. A reinforcement learning program for performing reinforcement learning for a continuous behavior space, causes a computer to execute processing of: wherein

predetermined settings for simulation and an agent model are stored,

in the simulation based on the setting in the reinforcement learning, a state in a next trial, a reward according to the state, and a flag indicating whether simulation execution has ended are acquired with a behavior defined in advance as an input,

the state acquired by the simulation is input to the agent model and a measure is acquired,

the behavior is calculated based on the measure and a search amount defined in advance,

the agent model is further updated according to the setting of the agent model based on the state, the reward, the flag, and the behavior,

the search amount is updated based on a prediction reward obtained for the reward and the search amount in a previous trial, and

the calculation of the behavior, the update of the agent model, and the update of the search amount are repeated until a predetermined condition according to the flag and the setting is satisfied.

# Fig. 1

100

11 CPU

12 ROM

13 RAM

14 STORAGE

15 INPUT UNIT

16 DISPLAY UNIT

17 COMMUNICATION I/F

19

# Fig. 2

100

101 SETTING INPUT UNIT

100A

110 LEARNING SETTING STORAGE UNIT

103 MODEL STORAGE UNIT

111 AGENT MODEL ESTIMATION UNIT

112 SEARCH AMOUNT ESTIMATION UNIT

102 SIMULATION EXECUTION UNIT

104 BEHAVIOR STORAGE UNIT

113 BEHAVIOR DETERMINATION UNIT

105 OPERATION OUTPUT UNIT

# Fig. 3

| SETTING ITEM | SETTING CONTENT | SETTING TARGET |
|---|---|---|
| SEARCH AMOUNT ESTIMATION UNIT PARAMETER | $\{\alpha: 0.99, \lambda:0.1, C:0.2\}$ | SEARCH AMOUNT ESTIMATION UNIT |
| INITIAL SEARCH AMOUNT | 0.2 | SEARCH AMOUNT ESTIMATION UNIT |
| REINFORCEMENT LEARNING ALGORITHM NAME | Unreal | AGENT MODEL ESTIMATION UNIT |
| MAXIMUM NUMBER OF STEPS | 50000 | AGENT MODEL ESTIMATION UNIT |
| SIMULATION TYPE NAME | ROOM TEMPERATURE REPRODUCTION env | SIMULATION EXECUTION UNIT |
| SIMULATION INITIALIZATION PARAMETER | $\{t: \text{"9:00"}\}$ | SIMULATION EXECUTION UNIT |
| INITIAL BEHAVIOR VALUE | 0.5 | SIMULATION EXECUTION UNIT |
| AGENT MODEL STORAGE FREQUENCY | 200 | AGENT MODEL ESTIMATION UNIT |
| · · · | · · · | · · · |

# Fig. 4

| REINFORCEMENT LEARNING ALGORITHM NAME | SIMULATION TYPE NAME | NUMBER OF STEPS | WEIGHTING COEFFICIENT |
|---|---|---|---|
| A3C | Cart-pole | 500 | {conv1:[0.1,0.1,0.3,⋯],⋯} |
| A3C | Cart-pole | 1000 | {conv1:[0.1,0.1,0.3,⋯],⋯} |
| . . . | . . . | . . . | . . . |

# Fig. 5

EP 4 492 302 A1

| DATE | SPACE 1 | SPACE 2 |
|---|---|---|
| 2021/8/10 9:00 | 25 | 25 |
| 2021/8/10 9:10 | 24 | 26 |
| 2021/8/10 9:20 | 24 | 26 |
| · · · | · · · | · · · |

# Fig. 6

```
                    ┌──────────────┐
                    │    START     │
                    └──────────────┘
                            │
                            ▼
        ┌───────────────────────────────┐
        │    INITIALIZE AGENT MODEL      │   S100
        │      AND SEARCH AMOUNT         │
        └───────────────────────────────┘
                            │
                            ▼
        ┌───────────────────────────────┐
        │      INITIALIZE SIMULATOR      │   S102
        │      AND ACQUIRE STATE s.      │
        └───────────────────────────────┘
                            │
                            ▼
        ┌───────────────────────────────┐
        │   INPUT STATE s TO AGENT MODEL │   S104
        │     AND ACQUIRE MEASURE π      │
        └───────────────────────────────┘
                            │
                            ▼
        ┌───────────────────────────────┐
        │    CALCULATE BEHAVIOR a BASED ON│  S106
        │ MEASURE π AND DEFINED SEARCH AMOUNT σ│
        └───────────────────────────────┘
                            │
                            ▼
        ┌───────────────────────────────┐
        │      ADD 1 TO CURRENT STEP     │   S108
        └───────────────────────────────┘
                            │
                            ▼
        ┌───────────────────────────────┐
        │   ACQUIRE NEXT STATE s, REWARD r, AND│  S110
        │ FLAG d AS SIMULATION EXECUTION UNIT 102│
        └───────────────────────────────┘
                            │
                            ▼
        ┌───────────────────────────────┐
        │       UPDATE AGENT MODEL       │   S112
        └───────────────────────────────┘
                            │
                            ▼
        ┌───────────────────────────────┐
        │   UPDATE SEARCH AMOUNT BASED   │   S114
        │ ON PREDICTION REWARD OBTAINED FROM│
        │ ACQUIRED REWARD r AND SEARCH AMOUNT σ│
        │        AT PREVIOUS TIME        │
        └───────────────────────────────┘
                            │
                            ▼
              ╱─────────────────────╲        S116
             ╱  IS FLAG d TRUE OR FALSE? ╲────── True
             ╲─────────────────────╱
                            │ False
                            ▼
              ╱─────────────────────╲        S118
        N ───╱     CURRENG STEP >     ╲
             ╲  NUMBER OF MAXIMUM STEPS? ╱
             ╲─────────────────────╱
                            │ Y
                            ▼
                    ┌──────────────┐
                    │     END      │
                    └──────────────┘
```

16

**EP 4 492 302 A1**

## INTERNATIONAL SEARCH REPORT

| International application No. |
|---|
| **PCT/JP2022/011121** |

| A. | CLASSIFICATION OF SUBJECT MATTER |
|---|---|

*G06N 20/00*(2019.01)i
FI:  G06N20/00

According to International Patent Classification (IPC) or to both national classification and IPC

| B. | FIELDS SEARCHED |
|---|---|

Minimum documentation searched (classification system followed by classification symbols)

G06N20/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2013-225192 A (NIPPON TELEGR & TELEPH CORP <NTT>) 31 October 2013 (2013-10-31) entire text, all drawings | 1-6 |
| A | US 2020/0110964 A1 (SEOUL NATIONAL UNIVERSITY R&DB FOUNDATION) 09 April 2020 (2020-04-09) entire text, all drawings | 1-6 |
| A | US 2020/0113017 A1 (AIRSPAN NETWORKS INC.) 09 April 2020 (2020-04-09) entire text, all drawings | 1-6 |
| A | CN 111782871 A (UNIV HUNAN) 16 October 2020 (2020-10-16) entire text, all drawings | 1-6 |
| A | 小林　泰介, リレー解説　機械学習の可能性《第7回》機械学習と制御: 連続行動空間における強化学習, 計測と制御, 10 October 2019, vol. 58, no. 10, pp. 806-810, ISSN: 0453-4662 entire text, (KOBAYASHI, Taisuke. Relay Review: Potentialities of Machine Learning. <7th> Machine Learning and Control: Reinforcement Learning in Continuous Action Space. Journal of The Society of Instrument and Control Engineers.) | 1-6 |

☑ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 May 2022** | **07 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2022/011121** |

### C.    DOCUMENTS CONSIDERED TO BE RELEVANT

| Category* | Citation of document, with indication, where appropriate, of the relevant passages | Relevant to claim No. |
| --- | --- | --- |
| A | DULAC-ARNOLD, Gabriel et al. Challenges of Real-World Reinforcement Learning. arXiv. arXiv:1904.12901v1. 2019, Retrieved from the Internet: <URL: https://arxiv.org/abs/1904.12901v1>, <DOI: 10.48550/arXiv.1904.12901> [retrieved on 22 May 2022] entire text | 1-6 |

Form PCT/ISA/210 (second sheet) (January 2015)

**INTERNATIONAL SEARCH REPORT**
Information on patent family members

International application No.

**PCT/JP2022/011121**

| Patent document cited in search report | | | Publication date (day/month/year) | Patent family member(s) | | | Publication date (day/month/year) |
|---|---|---|---|---|---|---|---|
| JP | 2013-225192 | A | 31 October 2013 | (Family: none) | | | |
| US | 2020/0110964 | A1 | 09 April 2020 | KR | 10-2090539 | B1 | |
| US | 2020/0113017 | A1 | 09 April 2020 | GB | 2577741 | A | |
| | | | | WO | 2020/070464 | A1 | |
| CN | 111782871 | A | 16 October 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HAJIME KIMURA** ; **SHIGENOBU KOBAYASHI**. Actor ni tekiseido no rireki o mochiita actor-critic algorithm: fukanzenna value-function no moto deno kyoka-gakushu (in Japanese) (Actor-Critic Algorithm Using Appropriateness History For Actor: Reinforcement Learning Under Incomplete Value-Function. *Artificial Intelligence*, 2000, vol. 15 (2), 267-275

- **KOICHIRO MORI** ; **HAYATO YAMANA**. Kyoka-gakushu heiretsuka ni yoru gakushu no kosokuka (in Japanese) (Accelerating Learning by Reinforcement Learning Parallelization). *IPSJ SIG technical reports, Intelligence and Complex System (ICS)*, 2004, vol. 2004 (29), 89-94